# EUROPÄISCHE PATENTSCHRIFT

(11) **EP 0 988 471 B1**
(45) Veröffentlichungstag und Bekanntmachung des Hinweises auf die Patenterteilung: **24.07.2002**
(21) Anmeldenummer: 97953626.5
(22) Anmeldetag: 16.12.1997
(51) Int. Cl.: F16H 1/16, E05B 47/00, F16H 55/22

(54) **ELEKTROMOTORISCHER STELLANTRIEB ZUM EINSATZ IN TECHNISCHEN EINRICHTUNGEN, INSBESONDERE IN KRAFTFAHRZEUGEN**
ACTUATING ELECTROMOTOR FOR TECHNICAL DEVICES, IN PARTICULAR IN MOTOR VEHICLES
SERVOMOTEUR ELECTRIQUE D'ENTRAINEMENT UTILE DANS DES DISPOSITIFS TECHNIQUES, NOTAMMENT DE VEHICULES A MOTEUR

(30) Priorität: 17.06.1997 DE 19725414
(43) Veröffentlichungstag der Anmeldung: 29.03.2000
(73) Patentinhaber: ROBERT BOSCH GMBH, 70442 Stuttgart (DE)
(72) Erfinder: HUCK, Thomas, D-58332 Schwelm (DE)
(86) Internationale Anmeldenummer: DE9702919
(87) Internationale Veröffentlichungsnummer: WO9858192

(56) Entgegenhaltungen:
- JP-A- 5 821 060
- JP-A- 5 899 521
- JP-A- 8 164 796
- US-A- 5 564 308

## Beschreibung

Die Erfindung betrifft einen elektromotorischen Stellantrieb zum Einsatz in technischen Einrichtungen, insbesondere in Kraftfahrzeugen, mit den Merkmalen des Oberbegriffes von Anspruch 1.

Elektromotorische Stellantriebe der in Rede stehenden Art werden in Kraftfahrzeugen in zunehmendem Maße für eine Vielzahl von Anwendungszwecken eingesetzt. Ein besonderes Anwendungsfeld sind die Stellantriebe an Kraftfahrzeugtürverschlüssen in Zentralverriegelungsanlagen (Seitentüren, Hecktüren, Heckklappe). Viele andere Anwendungsfelder sind bekannt, von der Verstellung der Scheinwerfer über die Verstellung von Seitenspiegeln bis zu Kopfstützen- und Sitzhöhenverstellungen. Elektromotorische Stellantriebe dieser Art finden sich aber auch in vielen anderen technischen Einrichtungen.

Die gattungsbildende US-A- 5 564 308 offenbart einen elektromotorischen stellantrieb gemäß dem Oberbegriff des Anspruchs 1.

Ein elektromotorischer Stellantrieb zum Einsatz in einer Zentralverriegelungsanlage eines Kraftfahrzeugs ist aus DE - A - 39 32 268 bekannt, bei dem ein kleiner elektrischer Antriebsmotor auf einer Grundplatte montiert ist und eine Motorwelle besitzt, auf der eine Schnecke befestigt ist. Die Schnecke kämmt mit dem verzahnten Abschnitt eines Schneckenrades, beide gemeinsam bilden ein Schneckengetriebe. Bei diesem Stand der Technik besteht die Schnecke aus einer Metallverbindung, nämlich aus Phosphorbronze, während das Schneckenrad aus einem Kunststoff, insbesondere aus einem thermoplastischen Kunststoff besteht. Dadurch werden bestimmte Reibungskoeffizienten zwischen den miteinander kämmenden Zahnreihen bzw. Zahnringen erreicht.

Bei dem bekannten Stand der Technik wird der elektrische Antriebsmotor abgeschaltet, sobald das über das Schneckengetriebe angetriebene Schwenkelement gegen einen Gummianschlag stößt. Dieser sogenannte Blockierbetrieb bringt jedenfalls beim Abschalten vergleichsweise hohe zu übertragende Drehmomente mit sich, die eben die Ausführung der Schnecke aus einer Metallverbindung, hier aus Phosphorbronze, erforderlich machen.

Während bei im Betrieb zu erwartenden hohen Belastungen hinsichtlich des zu übertragenden Drehmomentes regelmäßig aus Metall bestehende Schnecken eingesetzt und auf die glatte oder gekerbte Motorwelle aufgepresst werden, setzt man bei niedrigeren betrieblich zu erwartenden Belastungen aus Kostengründen gerne auch Kunststoffschnecken ein, die in gleicher Weise auf die glatte oder gekerbte Motorwelle aufgepresst oder auf eine entsprechend abgeflachte Motorwelle mit einer korrespondierenden Abflachung versehen aufgesteckt werden. Diese einfachere und kostengünstigere Ausführung eines elektromotorischen Stellantriebs verbietet sich bislang aber dort, wo hohe Drehmomente übertragen werden müssen und vor allem bei häufigem Auftreten des zuvor erläuterten Blockierbetriebs. Steckt man beispielsweise auf eine abgeflachte Motorwelle eines kleinen Antriebsmotors (Durchmesser der Motorwelle beispielsweise 2 mm) eine Kunststoffschnecke mit entsprechender Gegenabflachung auf, so ist diese Verbindung in der Regel nicht in der Lage, höhere Drehmomente über eine längere Zeit und die im Blockierbetrieb auftretenden Drehmomente zu übertragen.

Der Lehre der Erfindung liegt somit das Problem zugrunde, einen elektromotorischen Stellantrieb anzugeben, der kostengünstig eine aus Kunststoff bestehende Schnecke aufweist, gleichwohl aber hohe Drehmomente über das Schneckengetriebe übertragen kann und insbesondere einen permanenten Blockierbetrieb des Stellantriebs erlaubt.

Die zuvor aufgezeigte Aufgabe ist bei einem elektromotorischen Stellantrieb mit den Merkmalen des Oberbegriffs von Anspruch 1 durch die Merkmale des kennzeichnenden Teils von Anspruch 1 gelöst.

Erfindungsgemäß wird die aus Kunststoff bestehende Schnecke mit einem Mitnehmer aus härterem, größere Drehmomente übertragenden Material, insbesondere aus Metall oder einer Metallverbindung kombiniert. Die hohen Flächenpressungen (Hertzsche Pressungen) an den miteinander in Eingriff stehenden Formschlußelementen von Motorwelle und Mitnehmer aufgrund des geringen Durchmessers der Motorwelle werden auf ein für die Schnecke aus Kunststoff vertretbares Maß reduziert, indem die miteinander in Eingriff stehenden Formschlußelemente zwischen Mitnehmer und aus Kunststoff bestehender Schnecke mit erheblich größerem Durchmesser und damit wesentlich größeren Kraftübertragungsflächen auftreten.

Im Ergebnis kann man mit einem preisgünstigen kleinen Zusatzteil, nämlich dem Mitnehmer aus härterem Material, insbesondere aus Metall oder einer Metallverbindung den kostensparenden Einsatz einer Kunststoff-Schnecke ermöglichen. Diese Kombination ist wesentlich kostengünstiger als der Einsatz einer vollständig aus Metall, beispielsweise Phosphorbronze wie bisher bestehenden Schnecke.

Auf einem gänzlich anderen Sachgebiet, nämlich bei Drehknöpfen für Radios und sonstige Steuergeräte ist die Problematik zu hoher Hertzscher Pressungen zwischen abgeflachten Metall- und Kunststoffteilen seit Jahrzehnten bekannt (US - A-3,188,124 aus dem Jahr 1963). Die Problematik wird dort regelmäßig so gelöst, daß im Bereich der Abflachung in das als Hülse ausgeführte Kunststoffteil ein metallisches Verstärkungsstück (Plättchen) eingelegt oder eingeschoben wird. Dadurch wird das Auftreten der besonders gefährlichen Kantenpressungen an den Rändern der Abflachung vom Kunststoffmaterial ferngehalten und in das Metallplättchen eingeleitet. Diese seit Jahrzehnten bekannte Technik bei Betätigungsknöpfen hat auf das Gebiet elektromotorischer Stellantriebe mit Schneckengetrieben keinen Einfluß gehabt.

Bevorzugte Ausgestaltungen und Weiterbildungen sind Gegenstand der Unteransprüche.

Im folgenden wird die Erfindung anhand einer lediglich Ausführunasbeipiele darstellenden Zeichnung näher erläutert. In der Zeichnung zeigt
- Fig. 1: in einer schematischen Ansicht ein bevorzugtes Ausführungsbeispiel eines erfindungsgemäßen elektromotorischen Stellantriebs zum Einsatz in Kraftfahrzeugen, beispielsweise in einer Zentralverriegelungsanlage,
- Fig. 2: einen Schnitt entlang A-A in Fig. 1,
- Fig.3: eine Fig. 2 entsprechende Darstellung eines Ausführungsbeispiels eines nicht-erfindungsgemäßen elektromotorischen Stellantriebs.

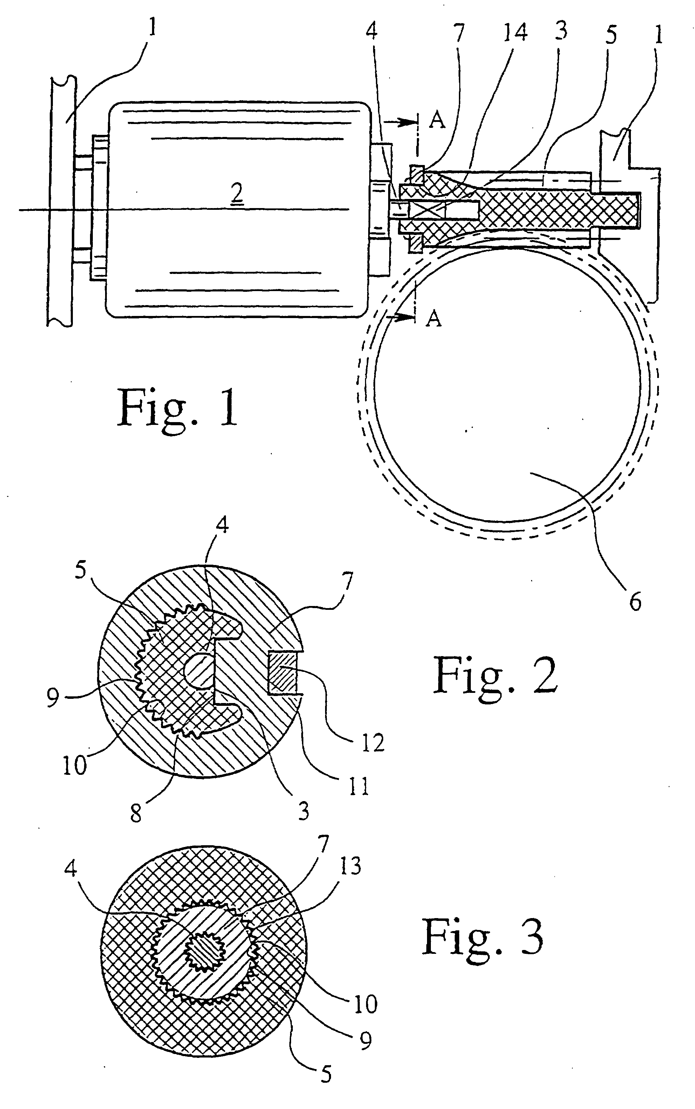

Fig. 1 zeigt eine klassische Anordnung eines elektromotorischen Stellantriebs zum Einsatz in Kraftfahrzeugen, beispielsweise im Kraftfahrzeugtürverschluß für die Funktion einer Zentralverriegelung. Die Lehre der Erfindung ist nicht auf elektrische Stellantriebe für Zentralverriegelungen beschränkt, sie hat es mit elektrischen Stellantrieben für alle Arten von Funktionen in Kraftfahrzeugen zu tun. Überdies sind elektromotorische Stellantriebe nach der Lehre der Erfindung auch nicht nur in Kraftfahrzeugen, sondern in allen möglichen technischen Einrichtungen zu finden, wo irgendwelche Bauteile elektromotorisch bewegt (verstellt) werden müssen.

Der in Fig. 1 dargestellte elektromotorische Stellantrieb weist zunächst einen Träger 1 auf, der hier nur angedeutet ist. Am Träger 1 ist montiert ein kleiner elektrischer Antriebsmotor 2. Dieser weist eine an mindestens einer Stelle, insbesondere vom Ende ausgehend, mit einem Getriebe-Formschlußelement 3 versehene Motorwelle 4 auf. Auf die Motorwelle 4 aufgesteckt ist eine Schnecke 5 eines Schneckeneetriebes. Das Schneckengetriebe weist ferner ein über in Eingriff miteinander stehende Verzahnungen mit der Schnecke 5 gekuppeltes Schneckenrad 6 auf. Bei kleinbauenden elektromotorischen Stellantrieben besteht das Schneckenrad 6 zumeist aus Kunststoff. Es sind aber auch andere Materialien, beispielsweise Metall, oder Verbundkonstruktionen denkbar.

Nach der Lehre der Erfindung besteht die Schnecke 5 aus Kunststoff, vorzugsweise thermoplastischem Kunststoff. Wie oben erläutert worden ist, sind die erreichbaren Flächenpressungen (Hertzsche Pressungen) zwischen Kunststoff und Metall vergleichsweise gering. Um die Kunststoff-Schnecke 5 auch bei der Übertragung hoher Drehmomente und insbesondere im Blockierbetrieb nicht zu schnell zu verschleißen ist erfindungsgemäß vorgesehen, daß ein aus einem härteren, größere Drehmomente als der Kunststoff der Schnecke 5 übertragenden Material bestehender Mitnehmer 7 auf die Motorwelle 4 aufgesteckt ist und mit einem korrespondierenden Wellen-Formschlußelement 8 mit dem Getriebe-Formschlußelement 3 der Motorwelle 4 in Eingriff steht, daß der Mitnehmer 7 auf einem gegenüber dem Durchmesser der Motorwelle 4 wesentlich größeren Durchmesser ein Schnecken-Formschlußelement 9 aufweist und daß die Schnecke 5 ihrerseits ein mit dem Schnecken-Formschlußelement 9 des Mitnehmers 7 in Eingriff siehendes Mitnehmer-Formschlußelement 10 aufweist. Der Terminus "aufgesteckt" meint in diesem Zusammenhang nicht nur das lose axiale Aufstecken, sondern alternativ auch das Aufstecken unter erheblichen Kraftaufwand bis hin zum Aufpressen oder Aufschrumpfen.

Fig. 2 zeigt besonders gut wie die Lehre der Erfindung zu verstehen ist. Die höchsten Flächenpressungen treten an den miteinander in Eingriff stehenden Getriebe- und Wellen-Formschlußelementen 3, 8 auf. Dieser Bereich ist mit dem Doppelpfeil F gekennzeichnet, der die Kraftwirkungen angeben soll. Demgegenüber verteilt sich das zu übertragende Drehmoment zwischen Schnecken- und Mitnehmer-Formschlußelementen 9, 10 auf eine wesentlich größere Fläche, die aufgrund ihres größeren Durchmessers zu wesentlich niedrigeren Flächenpressungen führt.

Man erkennt in Fig. 2 in Verbindung mit Fig. 1, daß im hier dargestellten Ausführungsbeispiel die miteinander in Eingriff stehenden Schnecken- und Mitnehmer-Formschlußelemente 9, 10 als Zahnringe bzw. Zahnbögen ausgeführt sind. Demgegenüber ist beim nicht-erfindungsgemäßen Ausführungsbeispiel von Fig. 3 vorgesehen, daß diese Formschlußelemente 9, 10 als Mehrkante, insbesondere Vierkante (Außenvierkant, Innenvierkant) ausgeführt sind.

Für die Ausführung der miteinander in Eingriff stehenden Getriebe- und Wellen-Formschlußelemente 3, 8 zeigt Fig. 2 die Ausführung als Abflachung bzw. Flachstück. Auch hier sind Alternativen als Kerbverzahnung oder Mehrkant o. dgl. ausführbar.

Das in Fig. 2 dargestellte Ausführungsbeispiel macht eine weitere Maßnahme deutlich, die zusätzlich zur Kraftübertragung von der Motorwelle 4 auf den Mitnehmer 7 vorgesehen ist. Es ist erkennbar, daß der Mitnehmer 7 eine Radialnut 11 aufweist, in die ein mit der Motorwelle 4 verbundener oder an dieser angeformter Mitnehmerzapfen 12 eingreift. Verbunden heißt in diesem Sinne auch materialschlüssig verbunden, also beispielsweise verschweißt. Einstückig angeformt meint ein entsprechendes formtechnisches Verfahren. Jedenfalls kann über die zusammenwirkenden Mitnehmerzapfen 12 und Radialnut 11 eine Drehmomentübertragung erfolgen, die auf einem großen Durchmesser am Mitnehmer 7 wirkt.

Unabhängig von der Kuppelung des Mitnehmers 7 mit der Motorwelle 4 kann es sich empfehlen, daß zusätzlich auch noch die Schnecke 5 ein mit dem Getriebe-Formschlußelement 3 der Motorwelle 4 in Eingriff stehendes Wellen-Formschlußelement aufweist. Dieses hätte in Fig. 2 die gleiche Lage wie das Wellen-Formschlußelement am Mitnehmer 7, die beiden Formschlußelemente säßen nur axial an unterschiedlichen Stellen relativ zur Motorwelle 4.

Zweckmäßig für die Lagerung im Träger 1 ist es, daß Schnecke 5 und Mitnehmer 7 gegenüber der Motorwelle 4 axial verschieblich sind. Aufgrund der Kraftwirkungsrichtungen und der Lagertoleranzen gibt es immer eine gewisse Relativverschiebung zwischen Schneckenrad 6 und Schnecke 5 je nach Belastungsrichtung. Damit der Antriebsmotor 2 unverändert feststehen kann, trotzdem aber die Schnecke 5 eine geringfügige axiale Relativbewegung gegenüber der Motorwelle 4 ausführen kann, empfiehlt sich eine solche axiale Verschieblichkeit, die als solche aus dem Stand der Technik auch bekannt ist.

Fig. 3 zeigt ein nicht-erfindungsgemäßes Ausführungsbeispiel, das dadurch gekennzeichnet ist, daß der Mitnehmer 7 als in eine abgesehen von dem Mitnehmer-Fonnschlußelemem 10 im wesentlichen zylindrische, axial verlaufende Fassung 13 in der Schnecke 5 eingesteckter Zylinderkörper ausgeführt ist. Während im in Fig. 2 dargestellten Ausführungsbeispiel die Schnecke 5 sich radial innerhalb des Mitnehmers 7 befindet, zeigt das in Fig. 3 dargestellte Ausführungsbeispiel die umgekehrte Anordnung mit innenliegendem Mitnehmer 7 und umfassender Kunststoff-Schnecke 5.

Das in Fig. 2 in Verbindung mit Fig. 1 dargestellte Ausführungsbeispiel zeigt einen in axialer Richtung eine geringe Erstreckung aufweisenden Mitnehmer 7. Es ist vorgesehen, daß die Schnecke 5 am dem Antriebsmotor ? zugewandten Ende eine Aufsteckfassung 14 für den ringartig ausgeführten Mitnehmer 7 aufweist.

Zur Montage wird der Mitnehmer 7 im dargestellten Ausführungsbeispiel von dem dem Antriebsmotor 2 zugewandten Ende aus auf die Aufsteckfassung 14 der Schnecke 5 aufgesteckt und darauf, vorzugsweise, durch Verrastung fixiert. Die Fixierung kann auch durch einen einfachen Pressitz erfolgen, der aber betrieblich möglicherweise nicht so sicher ist. Selbstverständlich können auch Klebetechniken angewandt werden.

Wesentlich für die Lehre der Erfindung ist es, daß die hohen Flächenpressungen, die bei Auftreten hoher Drehmomente an der Motorwelle 4 geringen Durchmessers verzeichnet werden, ausschließlich zwischen Metallteilen auftreten, wohingegen die Kraftübertragung in die Kunststoff-Schnecke 5 über große Flächen und damit mit geringen Flächenpressungen erfolgt.

Gerade bei dem Ausführungsbeispiel aus Fig. 2 kann man gut erkennen, daß es im dargestellten Ausführungsbeispiel zweckmäßig ist, den Mitnehmer 7 im spritztechnischen Herstellungsvorgang mit dem Material der Kunststoff-Schnecke 5 zu verspritzen. So ergibt sich eine innige Verbindung der Materialien über die im hier dargestellten Ausführungsbeispiel verwirklichte Kerbverzahnung und gleichzeitig eine gute axiale Fixierung.

Weiter oben ist schon erläutert worden, welche Materialien für den Mitnehmer 7 unter Berücksichtigung der betrieblichen Beanspruchung in Frage kommen. Insbesondere sind dies Metalle oder Metallverbindungen bzw. Metallegierungen, insbesondere aus Messing oder Bronze. Der Mitnehmer 7 kann als Sinterteil, als Spritzteil. als Stanzteil o. dgl. ausgeführt sein, hier gibt es viele fertigungstechnische Alternativen.

## Patentansprüche

1. Elektromotorischer Stellantrieb zum Einsatz in technischen Einrichtungen, insbesondere in Kraftfahrzeugen,
mit einem kleinen elektrischen Antriebsmotor (2) mit einer Motorwelle (4),
mit einer auf der Motorwelle (4) aufgesteckten, aus Kunststoff bestehenden Schnecke (5) eines Schneckengetriebes,
mit einem aus einem härteren, größere Drehmomente als der Kunststoff der Schnecke (5) übertragenden Material bestehenden Mitnehmer (7) auf der Motorwelle (4),
mit einem über in Eingriff miteinander stehende Verzahnungen mit der Schnecke (5) gekuppelten, vorzugsweise aus Kunststoff bestehenden Schneckenrad (6) des Schneckengetriebes,
wobei der Mitnehmer (7) auf einem gegenüber dem Durchmesser der Motorwelle (4) wesentlich größeren Durchmesser ein Schnecken-Formschlußelement (9) und die Schnecke (5) ihrerseits ein mit dem Schnecken-Formschlußelement (9) des Mitnehmers (7) in Eingriff stehendes Mitnehmer-Formschlußelement (10) aufweist,
**dadurch gekennzeichnet,**
**daß** die Motorwelle (4) an mindestens einer Stelle, insbesondere vom Ende ausgehend, mit einem Getriebe-Formschlußelement (3) versehen ist,
**daß** der Mitnehmer (7) auf die Motorwelle (4) aufgesteckt ist und mit einem korrespondierenden Wellen-Formschlußelement (8) mit dem Getriebe-Formschlußelement (3) der Motorwelle (4) in Eingriff steht,
**daß** die miteinander in Eingriff stehenden Getriebe- und Wellen-Formschlußelemente (3, 8) als Abflachungen bzw. Flachstücke ausgeführt sind,
**daß** die Schnecke (5) an dem dem Antriebsmotor (2) zugewandten Ende eine Aufsteckfassung (14) für den ringartig ausgeführten Mitnehmer (7) aufweist,
**daß** der Mitnehmer (7) aus Metall oder einer Metallverbindung bzw. einer Materiallegierung, insbesondere aus Messing oder Bronze besteht und
**daß** der Mitnehmer (7) als Stanzteil ausgeführt ist.

2. Stellantrieb nach Anspruch 1, **dadurch gekennzeichnet, daß** der Mitnehmer (7) eine Radialnut (11) aufweist, in die ein mit der Motorwelle (4) verbundener oder an dieser angeformter Mitnehmerzapfen (12) eingreift.

3. Stellantrieb nach Anspruch 1 oder 2, **dadurch gekennzeichnet, daß** Schnecke (5) und Mitnehmer (7) gegenüber der Motorwelle (4) axial verschieblich sind.

4. Stellantrieb nach einem der Ansprüche 1 bis 3, **dadurch gekennzeichnet, daß** der Mitnehmer (7) auf der Aufsteckfassung (14) durch Verrastung fixiert ist.

## Claims

1. Electromotive actuating drive for use in technical appliances, in particular in motor vehicles, with a small electric drive motor (2) having a motor shaft (4), with a worm (5) of a worm gear, said worm being slipped on the motor shaft (4) and consisting of plastic, with a driver (7) which consists of a harder material transmitting higher torques than the plastic of the worm (5) and which is located on the motor shaft (4), with a worm wheel (6) of the worm gear, said worm wheel being coupled to the worm (5) via intermeshing toothings and preferably consisting of plastic, the driver (7) having a worm form-locking element (9) on a diameter substantially larger than the diameter of the motor shaft (4), and the worm (5) itself having a driver form-locking element (10) which is in engagement with the worm form-locking element (9) of the driver (7), **characterized in that** the motor shaft (4) is provided at at least one point, in particular starting from the end, with a gear form-locking element (3), **in that** the driver (7) is slipped onto the motor shaft (4) and is in engagement by means of a corresponding shaft form-locking element (8) with the gear form-locking element (3) of the motor shaft (4), **in that** the gear and shaft form-locking elements (3, 8) which are in engagement with one another are designed as flattenings or flat pieces, **in that** the worm (5) has, at the end facing the drive motor (2), a slip-on holder (14) for the ring-like driver (7), **in that** the driver (7) consists of metal or a metal compound or a material alloy, in particular of brass or bronze, and **in that** the driver (7) is produced as a stamping.

2. Actuating drive according to Claim 1, **characterized in that** the driver (7) has a radial groove (11), into which engages a driver pin (12) connected to the motor shaft (4) or integrally formed on the latter.

3. Actuating drive according to Claim 1 or 2, **characterized in that** the worm (5) and the driver (7) are displaceable axially in relation to the motor shaft (4).

4. Actuating drive according to one of Claims 1 to 3, **characterized in that** the driver (7) is fixed on the slip on holder (14) by interlocking.

## Revendications

1. Actionneur à moteur électrique destiné à des installations techniques notamment des véhicules automobiles comprenant :
un petit moteur électrique (2) avec un arbre moteur (4),
une vis (5) de transmission à vis en matière plastique emmanchée sur l'arbre moteur (4),
un organe d'entraînement (7) engagé sur l'arbre moteur (4), cet organe d'entraînement étant en une matière plus dure, susceptible de transmettre des couples plus importants que la matière plastique de la vis (5),
une roue à vis (6) couplée à la vis (5) et en prise par des dentures, cette roue à vis étant de préférence en matière plastique, et l'organe d'entraînement (7) comportant sur un diamètre beaucoup plus grand que le diamètre de l'arbre moteur (4), un élément de liaison par la forme à vis (9), alors que la vis (5) de son côté comporte un élément de liaison par la forme (10), d'entraînement, en prise avec l'élément de liaison par la forme (9) de la vis de l'organe d'entraînement (7),
**caractérisé en ce que**
l'arbre moteur (4) comporte au moins à un endroit notamment partant de l'extrémité, un élément de liaison par la forme (3) de transmission,
l'organe d'entraînement (7) est engagé sur l'arbre moteur (4) et est en prise avec un élément de liaison par la forme (8) d'arbre, correspondant avec un élément de liaison par la forme de transmission (3) de l'arbre moteur (4), les éléments de liaison par la forme de transmission et d'arbre (3, 8) qui sont en prise, sont constitués par des parties aplaties ou des pièces aplaties, la vis (5) comporte à l'extrémité tournée vers le moteur d'entraînement (2), une garniture (14) à l'extrémité tournée vers le moteur (2) pour l'organe d'entraînement (7) annulaire,
l'organe d'entraînement (7) est en métal ou une combinaison de métaux ou un alliage de métaux notamment en laiton ou en bronze et
l'organe d'entraînement (7) est une pièce matricée.

2. Actionneur à moteur électrique selon la revendication 1,
**caractérisé en ce que**
l'organe d'entraînement (7) comporte une rainure radiale (11) dans laquelle vient prendre un ergot d'entraînement (12) relié à l'arbre moteur (4) ou formé sur celui-ci.

3. Actionneur à moteur électrique selon les revendications 1 ou 2,
**caractérisé en ce que**
la vis (5) et l'organe d'entraînement (7) peuvent coulisser axialement par rapport à l'arbre moteur (4).

4. Actionneur à moteur électrique selon l'une des revendications 1 à 3,
**caractérisé en ce que**
l'organe d'entraînement (7) est bloqué par accrochage sur la garniture d'emmanchement (14).
